# EUROPÄISCHE PATENTSCHRIFT

(11) **EP 2 133 581 B1**
(45) Veröffentlichungstag und Bekanntmachung des Hinweises auf die Patenterteilung: **30.07.2014**
(21) Anmeldenummer: 09006431.2
(22) Anmeldetag: 13.05.2009
(51) Int. Cl.: F16D 1/076, F04D 19/04

(54) **Verbindungselement**
Connecting element
Elément de liaison

(30) Priorität: 12.06.2008 DE 102008028199
(43) Veröffentlichungstag der Anmeldung: 16.12.2009
(73) Patentinhaber: Pfeiffer Vacuum GmbH, 35614 Asslar (DE)
(72) Erfinder: Stanzel, Jörg, 35583 Wetzlar (DE); Watz, Robert, 35781 Weilburg (DE)
(74) Vertreter: Manitz, Finsterwald & Partner GbR

(56) Entgegenhaltungen:
- EP-A2- 1 517 045
- FR-A- 1 428 205
- FR-A- 1 465 282
- GB-A- 2 062 085
- JP-A- S6 182 013
- JP-U- S6 359 890
- JP-U- H03 117 107
- US-A- 3 165 341

## Beschreibung

Die Erfindung betrifft ein Verbindungselement nach dem Oberbegriff des ersten Anspruchs.

Vakuumpumpen mit schnelldrehenden Rotoren, insbesondere der molekularen und turbomolekularen Bauart, speichern aufgrund der hohen Drehzahlen große kinetische Energie. Die Drehzahlen liegen üblicherweise bei einigen zehntausend Umdrehungen pro Minute.

Diese Vakuumpumpen weisen Normflansche auf und werden mit Normflanschen an den zu evakuierenden Vorrichtungen, meist Kammern, lösbar verbunden. Die hier betrachtete Norm gibt vor, dass jeder der zu verbindenden Flansch eine umlaufende Nut besitzt. In diese Nut greifen zwei Teile eines Verbindungselementes. Die Teile werden dann vorgespannt, wodurch die Flansche vakuumdicht aufeinandergepresst werden. Die hier betrachtete Flanschgeometrie ist in der Norm DIN 28 404 festgelegt.

Ein gattungsgemäßes Verbindungselement stellt die DE 102 42 907 A1 oder EP 1517045 A2 vor. Es besitzt zwei Teile, von denen das erste mit einem Gewinde augestattet ist, welches durch eine Bohrung im zweiten Teil hindurchgesteckt und gesichert wird. Die Sicherung und Einleitung der Vorspannung erfolgt durch eine auf das Gewinde aufgeschraubte Mutter.

Die eingangs genannte hohe kinetische Energie, die im Rotor gespeichert ist, erzeugt einige Rahmenbedingungen. Ein Problem entsteht im seltenen Falle einer Berührung von Rotor und Stator, dem sogenannten Rotor-Stator-Crash. Bei Einhalten der vorgeschrieben Betriebsbedinungen und Wartungsintervalle ist die Gefahr eines Rotor-Stator-Crashes sehr gering. Trotzdem müssen Vakuumpumpe und Verbindung von Vakuumpumpe und zu evakuierender Kammer dafür ausgelegt sein, die freiwerdenden Energien zu überstehen, ohne dass zu einer Gefährdung der Umgebung kommt. Diese Sicherheitsüberlegen stellen daher eine Grenze insbesondere von maximalem Rotordurchmesser, Rotordrehzahl und Materialien von Pumpengehäuse und Flansch dar.

Aufgabe ist es daher, ein Verbindungselement zu schaffen, welches eine Verbindung mit höherer Sicherheit gewährleistet und so die oben genannte Grenze erweitert.

Diese Aufgabe wird gelöst durch ein Verbindungselement mit den Merkmalen des ersten Patentanspruchs. Die Patentansprüche 2 bis 10 geben vorteilhafte Weiterbildungen an.

Hakenschraube und Kappe weisen je einen Klemmsteg auf, welcher in die Nut am Flansch eingreift. Die Länge des Klemmsteges in Nutrichtung wird als Klemmlänge bezeichnet, der Abstand der Klemmstege zueinander als Klemmabstand. Eine Klemmlänge, die größer als der Klemmabstand ist, verhindert eine Verkippung des Verbindungselements um eine Achse in der Flanschebene, die zu einem Abscheren der Nut führen kann. Das Kippmoment ergibt sich beispielsweise im Falle des Rotor-Stator-Crashes. Durch das erfindungsgemäße Verhältnis von Klemmlänge zu Klemmabstand werden die wirkenden Hebel günstiger und dadurch die Materialbelastung geringer. In der Folge können höhere Energien in Kauf genommen werden, beispielsweise durch eine höhere Rotordrehzahl oder Rotormasse. Alternativ kann ein weicheres Flanschmaterial verwendet werden, beispielsweise Aluminium statt Stahl.

Noch günstiger werden die Hebelverhältnisse, wenn die Klemmlänge mehr als das Eineinhalbfache des Klemmabstands beträgt. Dementsprechend werden die vorgenannten Vorteile vertieft.

Ist das Verbindungselement derart weitergebildet, dass Hakenschraube und Kappe einen Formschluss bilden, wird eine gegenseitige Verdrehung von Hakenschraube und Kappe um die senkrechte Achse des Verbindungselements verhindert. Gleichzeitig wird der Kraftfluss im Verbindungselement optimiert.

Die Maßnahme, die Hakenschraube mit Hilfe einer Flanschmutter in der Kappe zu sichern, verbessert einerseits die Montierbarkeit und andererseits die Krafteinleitung beim Vorspannen des Verbindungselements. Die verbesserte Vorspannung erhöht die Sicherheit der Verbindung von Vakuumpumpe und Kammer

In einer anderen Weiterbildung beträgt die Klemmtiefe, womit die radiale Dicke des Klemmsteges gemeint ist, für den Nennweitenbereich 63 mm bis 400 mm des Normklemmflansches wenigstens das 0,7-fache der Nutweite. Durch diese Maßnahme wird die Klemmfläche erhöht und somit die Flächenbelastung für den Flansch verringert. Dies verringert die Schädigung des Flansches im Falle eines Rotor-Stator-Crashes.

Gemäß einer anderen Weiterbildung ist der Innenradius eines Klemmsteges an einen ersten Flanschdurchmesser und der Außenradius an einen zweiten Flanschdurchmesser angepasst, wobei der erste Flanschdurchmesser größer als der zweite ist. Hierdurch wird die Klemmfläche maximiert, so dass die flanschseitige Materialbelastung sinkt. Dadurch können preiswertere Materialien Verwendung finden. Zudem spart die Verwendung eines Verbindungselementes bei verschiedenen Flanschdurchmessern Herstellungskosten ein, da im günstigsten Fall nur eine Variante des Verbindungselementes benötigt wird.

Wird das Verbindungselement derart weitergebildet, dass die Klemmstege an Hakenschraube und Kappe unterschiedlich lang sind und der längere Klemmsteg dem aus dem weicheren Material gefertigten Normklemmflansch zugeordnet ist, werden gemischte Materialpaarungen der Flansche von Vakuumpumpe und Kammer ermöglicht. Dabei werden die Anforderungen an die Sicherheit erfüllt.

Eine andere Weiterbildung ist, die Kappe als Kreisbogensegment zu gestalten, vorzugsweise derart, dass ein ganzzahliges Vielfaches der Segmentlänge den Umfang eines Normklemmflansches ergibt. Hierdurch wird eine sehr hohe Sicherheit im Falle eines Rotor-Stator-Crashes erreicht, da die wirkenden Hebel und genutzten Klemmflächen optimiert sind. Die vorgenannten Vorteile in Bezug auf Rotordrehzahl, Rotormasse und Materialwahl werden deutlich gesteigert.

In einer Weiterbildung sind einer Kappe wenigstens zwei Hakenschrauben zugeordnet. Hierdurch wird der Kraftfluss zwischen Kappe und Hakenschraube sowie die Krafteinleitung in die Flansche verbessert.

Durch die Weiterbildung nach Anspruch 10 werden die Klemmflächen sehr groß und die Hebelwirkungen noch günstiger. Dementsprechend werden die Vorteile nach Anspruch 1 weiter vertieft.

Anhand eines Ausführungsbeispieles und zweier Weiterbildungen desselben soll die Erfindung näher erläutert und weitere Vorteile aufgezeigt werden. Es zeigen:
- Fig. 1:: Schnitt durch eine Anordnung mit einem Verbindungselement.
- Fig. 2:: Frontansicht eines Verbindungelementes
- Fig. 3:: Schnitt durch ein Verbindungselement.
- Fig. 4:: Schnitt durch den Klemmsteg des Verbindungselements.
- Fig. 5:: Sicht auf ein Verbindungselement gemäß einer ersten Weiterbildung.
- Fig. 6:: Sicht auf ein Verbindungselement gemäß einer zweiten Weiterbildung.

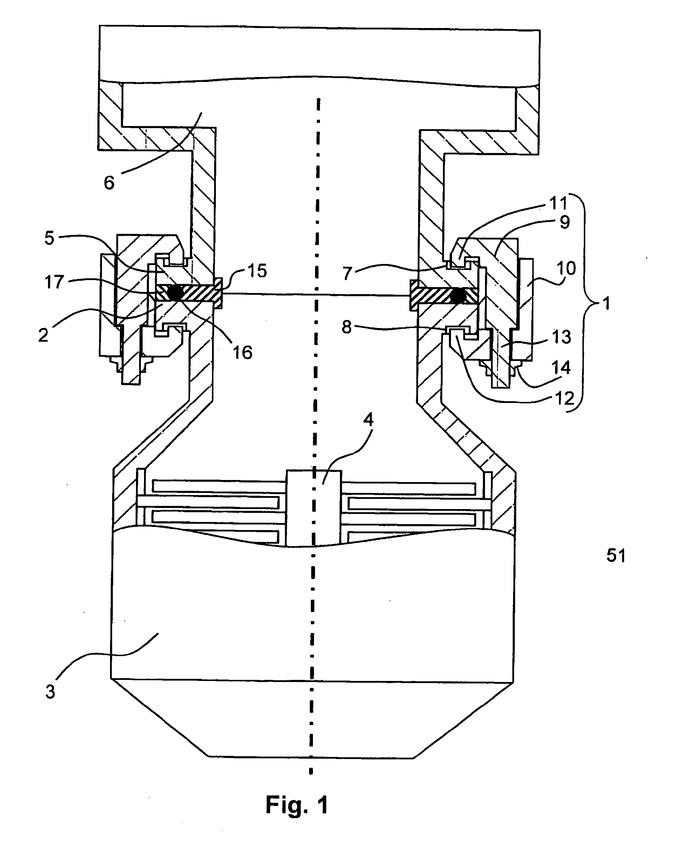

In Figur 1 ist der Teilschnitt durch eine Anordnung gezeigt, die ein erfindungsgemäßes Verbindungselement enthält. Dieses Verbindungselement 1 schafft eine lösbare Verbindung zwischen dem Normklemmflansch 2 einer Vakuumpumpe 3 und dem Normklemmflansch 5 einer Kammer 6. Die Vakuumpumpe weist einen schnelldrehenden Rotor 4 auf, dessen Drehzahl bei einigen 10 000 Umdrehungen pro Minute liegt.

Der Normklemmflansch 2 der Vakuumpumpe weist eine umlaufende Nut 8 auf. Ebenso weist der Normklemmflansch 5 der Kammer eine umlaufende Nut 7 auf. Das Verbindungselement enthält eine Hakenschraube 9, an welcher ein Klemmsteg 11 vorgesehen ist. Dieser greift in die Nut 7 des Normflansches der Kammer. Weiterhin enthält es eine Kappe 10, deren Klemmsteg 12 in die Nut 8 des Normflansches der Vakuumpumpe greift. Die Hakenschraube weist einen Gewindeabschnitt 13 auf, der durch eine zu ihm angepassten Bohrung in der Kappe gesteckt ist. Eine auf diesem Gewindeabschnitt befindlicher Flanschmutter 14 ermöglicht, Kappe und Hakenschraube miteinander zu verbinden und eine Vorspannung der Flanschverbindung zu bewirken.

Zwischen den Normklemmflanschen 2 und 5 ist ein Zentrierring 15 angeordnet. Dieser bewirkt eine genaue Ausrichtung der Normklemmflansche zu einander, insbesondere zentriert er die beiden Öffnungen der Flansche. Der Zentrierring ist von von einem Stützring 17 umgeben. Zwischen Zentrierring und Stützring befindet sich eine Dichtung 16, die eine dem Druckbereich entsprechende Abdichtung der Normklemmflansche schafft. Insbesondere ist die zwischen der Dichtung und den Oberflächen der Normklemmflansche hindurchtretende Gasmenge so klein, dass sie für das Vakuum in der Kammer vernachlässigbar ist.

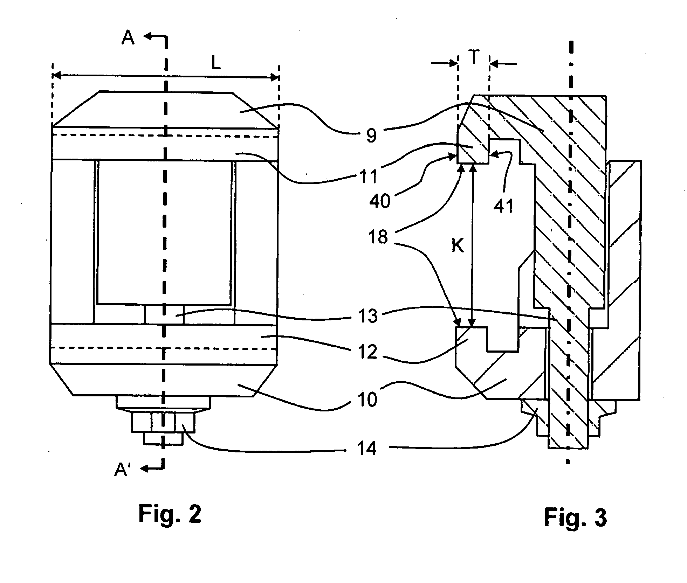

Das erfindungsgemäße Verbindungselement ist in den Figuren 2 bis 4 im Detail dargestellt.

Figur 2 zeigt zunächst eine Draufblick von der dem Normklemmflansch zugewandten Seite. Die Hakenschraube 9 befindet sich nicht bis zum Anschlag in der Kappe 10 sondern ist in dieser Darstellung leicht aus dieser herausgezogen. Die Flanschmutter 14 sitzt auf dem Gewindeabschnitt 13. Das Verbindungselement kann so bei der Montage der Anordnung nach Figur 1 über die beiden gegeneinander gesetzten und durch den Zentrierring zentrierten Normklemmflansche geschoben werden. Anschließend wird die Flanschmutter auf dem Gewindeabschnitt festgezogen und dadurch die Normklemmflansche durch die mittels der Klemmstege eingeleiteten Kräfte gegeneinander gepresst.

In der Ansicht der Figur 2 blickt der Betrachter auf die Klemmstege 11 und 12. Mit gestrichelten Linien sind die Grundflächen angedeutet, auf denen die Klemmstege angeordnet sind. Die Klemmstege erstrecken sich über die gesamte Ausdehnung des Verbindungselements in Umfangsrichtung. Diese ist in der Figur die horizontale Ausdehnung und steht senkrecht auf die durch den Gewindeabschnitt definierten Achse. Die Ausdehnung der Klemmstege in Umfangsrichtung ist mit Klemmlänge L bezeichnet. Die dem Flanschinneren zugewandte Oberfläche des Klemmsteges bildet die Außenkante 40, die dem Verbindungselement zugewandte Oberfläche die Innenkante 41.

Die Klemmlängen an Hakenschraube und Kappe sind in dem gezeigten Beispiel gleichlang. Sie können unterschiedlich sein, wenn unterschiedlich harte Materialien für die Normklemmflansche 2 und 5 verwendet werden. Denkbar ist beispielsweise, dass der pumpenseitige Normklemmflansch aus einer Aluminiumlegierung besteht und der kammerseitige Normklemmflansch aus einem Stahl. In diesem Falle reicht es, denjenigen Klemmsteg erfindungsgemäß zu gestalten, der dem Aluminiumflansch zugeordnet ist, während der andere Klemmsteg nach dem Stand der Technik dimensioniert ist.

Die Figur 3 zeigt den Schnitt durch das Verbindungselement der Figur 2 entlang der dort angegeben Schnittlinie A-A'. Diese Schnittlinie und die Symmetrieachse der Normklemmflansche liegen in einer Ebene. Die Bohrung für den Gewindeabschitt 13 und die Ausnehmungen in der Kappe 10, in der sich die Hakenschraube 9 befindet, sind derart gestaltet, dass Hakenschraube und Kappe einen Formschluss bilden. Hierdurch wird einerseits eine besonders gute Kraftübertragung der Klemmkräfte und andererseits eine hohe Verdrehsicherheit um die Achse des Gewindeabschnitts erreicht.

Die maximale Ausdehnung der Klemmstege 11 und 12 ist mit Klemmtiefe T bezeichnet. Die jeweils den Klemmflanschen zugewandte und im montierten Zustand mit ihnen in Kontakt stehenden Oberflächen der Klemmstege wird mit Klemmfläche 18 bezeichnet. Der Abstand dieser Klemmflächen ist der Klemmabstand K.

Bei der Gestaltung des Verbindungselements wird dieser Klemmabstand auf Grundlage der DIN 28 404 unter Berücksichtigung der Notwendigkeit eines Zentrierringes bemessen. Für eine Nennweite des Flansches im Bereich DN 63 bis DN 250 beträgt die Dicke der Normklemmflansche 10 mm, die Dicke des Zentrierrings liegt bei 4 mm, so dass der Klemmabstand für einen Wert von 24 mm ausgelegt wird. Erfindungsgemäß beträgt dann die Klemmlänge mehr als 24 mm. In einer vorteilhaften Weiterbildung beträgt die Klemmlänge mehr als 36 mm. Bei größeren Flanschdurchmessern als DN 250 liegt laut Norm ein größerer Wert der Dicke des Normklemmflansches vor. Diese Dicke ist zur Gestaltung des Verbindungselements der Norm zu entnehmen, wiederum ist die Dicke des Zentrierrings zu beachten. Durch diese Gestaltung der Klemmlänge wird eine hohe Sicherheit gegen eine Verdrehung um eine Drehachse bewirkt, welche in der zur Symmetrieachse der Flanschverbindung senkrechten Ebene liegt. Diese Wirkung beruht auf den günstigen Hebelverhältnissen, die den beispielsweise durch einen Rotor-Stator-Crash verursachten Kippmomenten entgegenstehen. Überdies vergrößert eine erfindungsgemäße Klemmlänge die Klemmfläche, so dass die Belastung für das Material des Normklemmflansches geringer wird.

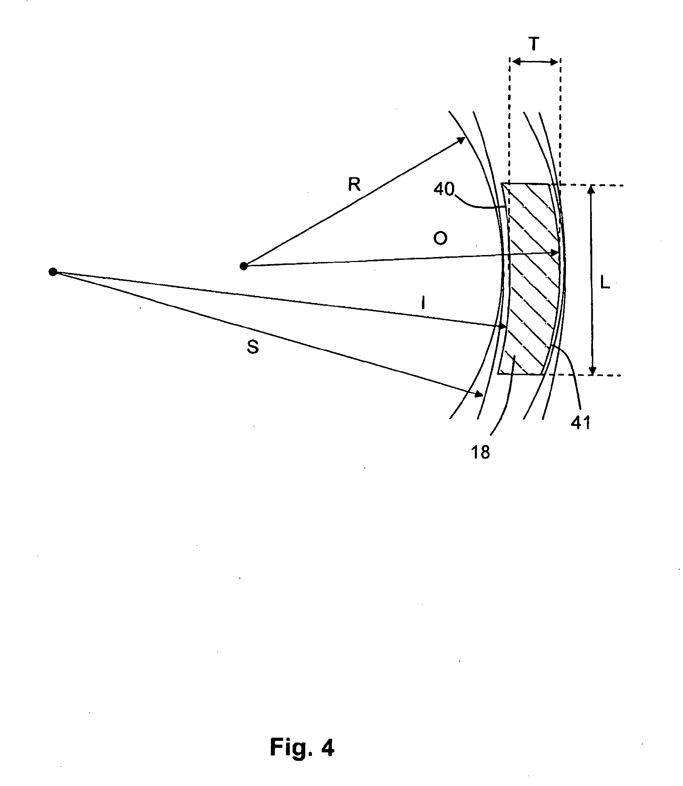

Die Gestaltung des Klemmsteges ist in Figur 4 gezeigt. Dabei kann es sich um den Klemmsteg von Hakenschraube oder Kappe oder von beiden handeln. Der Klemmsteg hat die Klemmlänge L als Ausdehnung in Umfangs- bzw. Nutrichtung und die maximale Klemmtiefe T in radialer Richtung. In Figur 4 sind die Nuten für zwei verschiedene Flanschdurchmesser eingezeichnet. Für einen kleinen Durchmesser des Normklemmflansches ergibt sich ein kleiner Radius R der Nut. Für einen großen Durchmesser des Normklemmflansches ergibt sich ein Radius S, der größer als der Radius R ist. Die Klemmfläche ist nun so gestaltet, dass die der Flanschöffnung zugewandten Außenkante 40 einem Radius I folgt, der dem größeren Radius S angepasst ist. Zudem folgt die dem Verbindungselement zugewandte Innenkante 41 einem Radius O, welcher dem kleinen Radius R angepasst ist. Durch dieses Maßnahme lässt sich das Verbindungselement bei verschiedenen Flanschdurchmessern verwenden und weist dann eine maximale Klemmfläche auf. Dadurch wird, wie oben beschrieben, die Krafteinleitung in das Flanschmaterial derart verbessert, dass die Belastung für das Material verringert wird. Im Falle hoher Drehmomente, wie sie beim Rotor-Stator-Crash auftreten, wird so eine Überbeanspruchung des Materials verhindert.

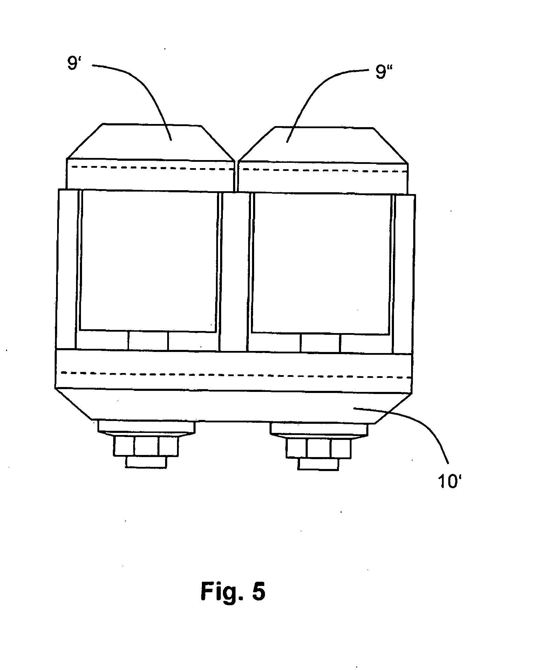

Figur 5 zeigt eine erste Weiterbildung des Verbindungselementes. In einer Kappe 10' sind zwei Hakenschrauben 9' und 9" angeordnet. Durch diese Weiterbildung werden noch günstigere Hebel- und Flächenverhältnisse erreicht. Dementsprechend werden die Vorteile für die Sicherheit der Flanschverbindung vertieft.

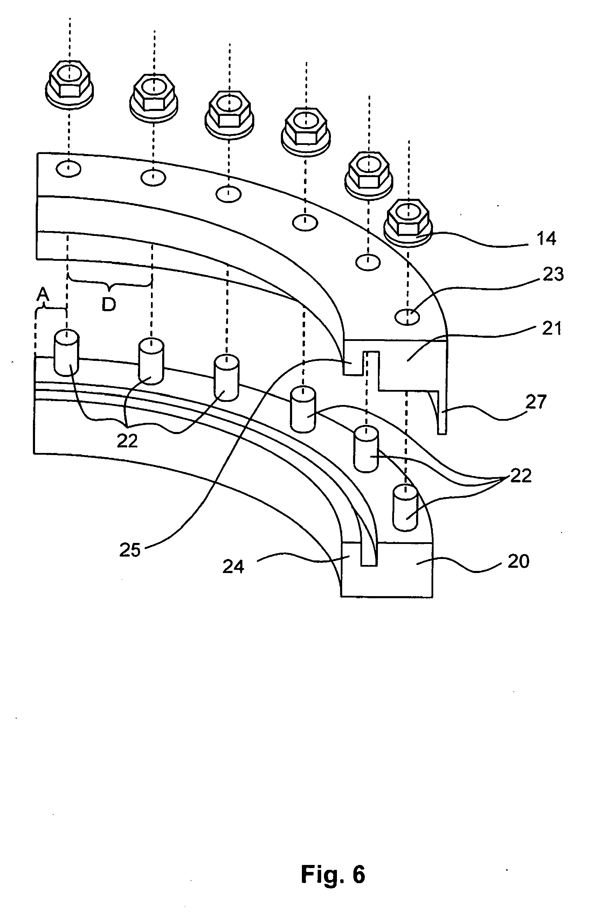

Eine zweite Weiterbildung des Verbindungselementes ist in Fig. 6 dargestellt. Hakenschraube 20 und Kappe 21 sind jeweils derart als Kreisbogensegment gestaltet, dass ein ganzzahliges Vielfaches auf den Umfang eines Normklemmflansches passt. Im in dieser Figur gezeigten Beispiel entsprechen die Kreisbogensegmente einem Viertelkreis, so dass vier der gezeigten Verbindungselemente an einer Flanschverbindung montiert werden können. die Hakenschraube weist mehrere Gewindeabschnitte 22 auf, die durch mehrere in der Kappe vorgesehene Bohrungen 23 gesteckt werden. Die Hakenschraube weist einen Klemmsteg 24, die Kappe einen Klemmsteg 25 auf, wobei die Klemmstege im montierten Zustand in die Nuten der Normklemmflansche eingreift. Eine an der Kappe vorgesehene Führung 27 sorgt für einen Formschluss zwischen Kappe und Hakenschraube. Durch diese Ausführung werden sowohl Klemmlänge als auch Klemmfläche bezogen auf den Umfang maximiert, so dass die vorgenannten Vorteile vertieft werden und insbesondere eine sehr hohe Sicherheit der Anordnung erreicht wird.

In einer Weiterbildung ist der Abstand D zwischen allen Gewindeabschnitte 22 gleich. Durch einen Abstand A, der kleiner als die Hälfte des Abstandes D beträgt, kann erreicht werden, dass Hakenschraube und Kappe um ein oder mehrere Werte von D versetzt gegeneinander montiert werden können. In der Folge wird dann eine Hakenschraube mit zwei benachbarten Kappen verbunden und auf diese Art ein die Normklemmflansche umgebender Ring geschaffen. Solch ein Ring verhindert zuverlässig ein Lösen der Normklemmflansche durch abnormale Ereignisse während des Betriebes der Anordnung, beispielsweise ein Rotor-Stator-Crash.

## Patentansprüche

1. Verbindungselement (1) zum Verbinden eines Normklemmflansches (2) einer Vakuumpumpe, welche einen schnelldrehendem Rotor (4) beinhaltet, mit einem Normklemmflansch (5) einer Kammer (6), wobei an jedem Normklemmflansch (2, 5) eine Nut (7, 8) angeordnet ist, welches eine Hakenschraube (9; 9', 9") und eine Kappe (10; 10') mit je einem Klemmsteg (11, 12), der mit der Nut in Eingriff steht, aufweist, **dadurch gekennzeichnet, dass** die Klemmlänge (L) eines Klemmsteges (11, 12) in Nutrichtung größer als der Klemmabstand (K) ist.

2. Verbindungselement nach Anspruch 1, **dadurch gekennzeichnet, dass** die Klemmlänge (L) mehr als das Eineinhalbfache des Klemmabstands (K) beträgt.

3. Verbindungselement nach Anspruch 1 oder 2, **dadurch gekennzeichnet, dass** Hakenschraube (9; 9', 9") und Kappe (10; 10') einen Formschluss bilden.

4. Verbindungselement nach einem der vorhergehenden Ansprüche, **dadurch gekennzeichnet, dass** die Hakenschraube (9; 9', 9") mit Hilfe einer Flanschmutter (14) in der Kappe (10; 10') gesichert wird.

5. Verbindungselement nach einem der vorhergehenden Ansprüche, **dadurch gekennzeichnet, dass** die Klemmtiefe (T) des Klemmsteges für den Nennweitenbereich 40 mm bis 400 mm des Normklemmflansches wenigstens das 0,7-fache der Nutweite beträgt.

6. Verbindungselement nach einem der vorhergehenden Ansprüche, **dadurch gekennzeichnet, dass** der Innenradius eines Klemmsteges (11, 12; 24, 25) an einen ersten Flanschdurchmesser und der Außenradius an einen zweiten Flanschdurchmesser angepasst ist, wobei der erste Flanschdurchmesser größer als der zweite ist.

7. Verbindungselement nach einem der vorhergehenden Ansprüche, **dadurch gekennzeichnet, dass** die Klemmstege (11, 12; 24, 25) an Hakenschraube (9; 9', 9") und Kappe (10; 10') unterschiedlich lang sind und der längere Klemmsteg dem aus dem weicheren Material gefertigten Normklemmflansch zugeordnet ist.

8. Verbindungselement nach Anspruch 1 bis 5, **dadurch gekennzeichnet, dass** die Kappe als Kreisbogensegment (21) gestaltet ist.

9. Verbindungselement nach einem der Ansprüche 1 bis 8, **dadurch gekennzeichnet, dass** der Kappe (10; 10') wenigstens zwei Hakenschrauben (9'; 9") zugeordnet sind.

10. Verbindungselement nach Anspruch 8, **dadurch gekennzeichnet, dass** die Hakenschraube (20) als der Kappe (21) zugeordnetes Kreisbogensegment gestaltet ist und wenigstens zwei gewindetragende Abschnitte (22) aufweist.

## Claims

1. A connection element (1) for connecting a standard clamping flange (2) of a vacuum pump comprising a fast-rotating rotor (4) to a standard clamping flange (5) of a chamber (6), wherein a groove (7, 8) is arranged at each standard clamping flange (2, 5), said connection element having a clip bolt (9; 9', 9") and a cap (10; 10'), each having a clamping web (11, 12) which is in engagement with the groove, **characterised in that** the clamping length (L) of a clamping web (11, 12) is larger in the groove direction than the clamping spacing (K).

2. A connection element in accordance with claim 1, **characterised in that** the clamping length (L) amounts to more than one and a half times the clamping spacing (K).

3. A connection element in accordance with claim 1 or claim 2, **characterised in that** the clip bolt (9; 9', 9") and the cap (10; 10') form a shape-matched connection.

4. A connection element in accordance with any one of the preceding claims, **characterised in that** the clip bolt (9; 9', 9") is secured in the cap (10; 10') with the aid of a flange nut (14).

5. A connection element in accordance with any one of the preceding claims, **characterised in that** the clamping depth (T) of the clamping web amounts to at least 0.7 times the groove width for the standard width range 40 mm to 400 mm of the standard clamping flange.

6. A connection element in accordance with any one of the preceding claims, **characterised in that** the inner radius of a clamping web (11, 12; 24, 25) is adapted to a first flange diameter and the outer radius is adapted to a second flange diameter, with the first flange diameter being larger than the second flange diameter.

7. A connection element in accordance with any one of the preceding claims, **characterised in that** the clamping webs (11, 12; 24, 25) at the clip bolt (9; 9', 9") and the cap (10; 10') are of different lengths and the longer clamping web is associated with the standard clamping flange produced from the softer material.

8. A connection element in accordance with claims 1 to 5, **characterised in that** the cap is designed as a segment of an arc of a circle (21).

9. A connection element in accordance with any one of the claims 1 to 8, **characterised in that** at least two clip bolts (9'; 9") are associated with the cap (10; 10').

10. A connection element in accordance with claim 8, **characterised in that** the clip bolt (20) is designed as a segment of an arc of a circle associated with the cap (21) and has at least two thread-bearing sections (22).

## Revendications

1. Élément de liaison (1) pour la liaison d'une bride de serrage normalisée (2) d'une pompe à vide, qui contient un rotor en rotation rapide (4), avec une bride de serrage normalisée (5) d'une chambre (6), dans lequel sur chaque bride de serrage normalisée (2, 5) est ménagée une gorge (7, 8), qui comprend une vis à crochet (9 ; 9', 9") et un capuchon (10 ; 10') ayant chacun/chacune une barrette de serrage (11, 12) qui est engagée dans la gorge, **caractérisé en ce que** la longueur de serrage (L) d'une barrette de serrage (11, 12) en direction utile est plus grande que l'écart de serrage (K).

2. Élément de liaison selon la revendication 1, **caractérisé en ce que** la longueur de serrage (L) s'élève à plus de une fois et demie l'écart de serrage (K).

3. Élément de liaison selon la revendication 1 ou 2, **caractérisé en ce que** la vis à crochet (9 ; 9', 9") et le capuchon (10 ; 10') forment un blocage à coopération de formes.

4. Élément de liaison selon l'une des revendications précédentes, **caractérisé en ce que** la vis à crochet (9 ; 9', 9") est bloquée à l'aide d'un écrou à bride (14) dans le capuchon (10 ; 10').

5. Élément de liaison selon l'une des revendications précédentes, **caractérisé en ce que** la profondeur de serrage (T) de la barrette de serrage s'élève, pour la plage des largeurs nominales de 40 mm à 400 mm de la bride de serrage normalisée, à au moins 0,7 fois la largeur de la gorge.

6. Élément de liaison selon l'une des revendications précédentes, **caractérisé en ce que** le rayon intérieur d'une barrette de serrage (11, 12 ; 24, 25) est adapté à un premier diamètre de bride et le rayon extérieur est adapté à un second diamètre de bride, le premier diamètre de bride étant plus grand que le second.

7. Élément de liaison selon l'une des revendications précédentes, **caractérisé en ce que** les barrettes de serrage (11, 12 ; 24, 25) sur la vis à crochet (9 ; 9', 9") et sur le capuchon (10 ; 10') ont des longueurs différentes et la barrette de serrage la plus longue est associée à la bride de serrage normalisée fabriquée avec le matériau plus tendre.

8. Élément de liaison selon les revendications 1 à 5, **caractérisé en ce que** le capuchon est conçu sous la forme d'un segment d'arc circulaire (21).

9. Élément de liaison selon l'une des revendications 1 à 8, **caractérisé en ce qu'**au moins deux vis à crochet (9'; 9") sont associées au capuchon (10 ; 10').

10. Élément de liaison selon la revendication 8, **caractérisé en ce que** la vis à crochet (20) est conçue comme un segment d'arc circulaire associé au capuchon (21) et comprend au moins deux tronçons (22) portant un pas de vis.
